(19)

Europäisches
Patentamt
European
Patent Office
Office européen
des brevets

(11) **EP 4 290 721 A1**

(12) **EUROPEAN PATENT APPLICATION**
published in accordance with Art. 153(4) EPC

(43) Date of publication:
**13.12.2023 Bulletin 2023/50**

(21) Application number: **22749146.1**

(22) Date of filing: **29.01.2022**

(51) International Patent Classification (IPC):
**H02H 7/26** *(2006.01)*        **H02J 3/36** *(2006.01)*

(52) Cooperative Patent Classification (CPC):
**H02H 7/26; H02J 3/36**

(86) International application number:
**PCT/CN2022/074899**

(87) International publication number:
**WO 2022/166867 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.02.2021 CN 202110172033**

(71) Applicants:
• **NR ELECTRIC CO., LTD.**
**Jiangning
Nanjing,
Jiangsu 211102 (CN)**
• **NR Engineering Co., Ltd.**
**Nanjing, Jiangsu 211102 (CN)**

(72) Inventors:
• **LU, Jiang**
**Nanjing Jiangsu 211102 (CN)**

• **DONG, Yunlong**
**Nanjing Jiangsu 211102 (CN)**
• **YU, Xiang**
**Nanjing Jiangsu 211102 (CN)**
• **YANG, Jianming**
**Nanjing Jiangsu 211102 (CN)**
• **WANG, Yangzheng**
**Nanjing Jiangsu 211102 (CN)**
• **LU, Yu**
**Nanjing Jiangsu 211102 (CN)**
• **TIAN, Jie**
**Nanjing Jiangsu 211102 (CN)**
• **LI, Haiying**
**Nanjing Jiangsu 211102 (CN)**
• **QIU, Defeng**
**Nanjing Jiangsu 211102 (CN)**
• **HUANG, Ruhai**
**Nanjing Jiangsu 211102 (CN)**

(74) Representative: **Cabinet Bleger-Rhein-Poupon
4a rue de l'Industrie
67450 Mundolsheim (FR)**

(54) **METHOD AND APPARATUS FOR HANDLING DIRECT-CURRENT SIDE LINE FAULT OF VOLTAGE SOURCE CONVERTER**

(57)    The invention provide a method and device for handling a DC-side line fault of a voltage source converter, wherein the voltage source converter is arranged at a rectifier end or an inverter end of any DC pole of a DC transmission system, and the rectifier end and the inverter end are connected through a DC line. The fault handling method comprises: acquiring a normal value of a DC voltage reference value of the voltage source converter; setting a DC current limiting target value of the voltage source converter; acquiring a DC current limiting control output value based on a DC current measured value and the DC current limiting target value; setting a DC voltage reference value of the voltage source converter based on the normal value of the DC voltage reference value and the DC current limiting control output value; setting the DC current limiting target value to be zero when a DC side line fault is detected; and rising the DC voltage reference value of the voltage source converter in response to end of de-ionization, and changing the DC current limit target value of the voltage source converter.

EP 4 290 721 A1

Acquiring a normal value $U_{dVref\text{-}Nom}$ of a DC voltage reference value of a voltage source converter according to a DC voltage control target of a DC pole     S100

Setting a DC current limiting target value $I_{dclim}$ of the voltage source converter to be $-\Delta I$ when no DC-side line fault is detected     S200

Obtaining a DC current limiting control output value after linear control, such as PI control, is performed based on a difference value between the DC current measured value $I_{dc}$ and the DC current limiting target value $I_{dclim}$     S300

Using a smaller one of the DC current limiting control output value and the normal value $U_{dVref\text{-}Nom}$ of the DC voltage reference value of the voltage source converter as the DC voltage reference value $U_{dVref}$ of the voltage source converter for the control of the voltage source converter     S400

When a DC-side line fault is detected, setting the DC current limiting target value $I_{dclim}$ to be zero, and controlling the DC current measured value $I_{dc}$ to be zero until de-ionization is end     S500

After de-ionization, rising the DC voltage reference value $U_{dVref}$ of the voltage source converter from a current value to the normal value $U_{dVref\text{-}Nom}$ of the DC voltage reference value of the voltage source converter according to a predetermined slope, and switching the DC current limiting target value $I_{dclim}$ from zero to $-\Delta I$ at the same time     S600

After the DC voltage reference value $U_{dVref}$ of the voltage source converter is risen to the normal value $U_{dVref\text{-}Nom}$ of the DC voltage reference value of the voltage source converter, ending the DC-side line fault handling process     S700

Fig. 5

## Description

Technical Field

The application relates to the technical field of DC transmission, in particular to a method and device for handling a DC-side line fault of a voltage source converter.

Background

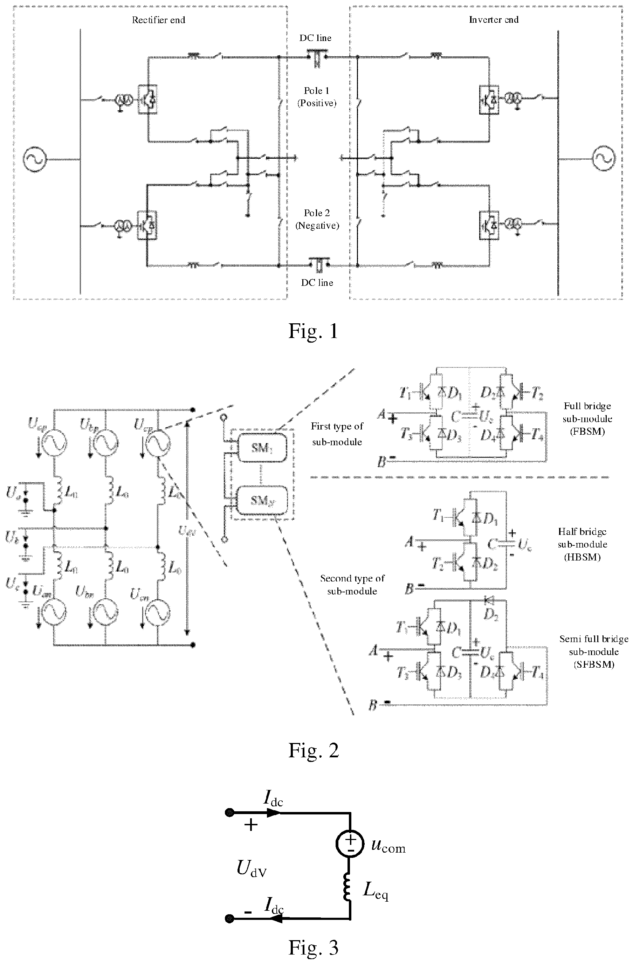

With the continuous development of power electronic devices and the wide application of DC transmission technology, a hybrid DC transmission system with at least one converter station using a thyristor converter and at least one converter station using a voltage source converter or a flexible DC transmission system with all converter stations using voltage source converters has a wide application prospect. Fig. 1 is a common two-terminal bipolar flexible DC transmission system, which is composed of a positive DC pole and a negative DC pole, and each DC pole is a complete DC transmission loop comprising a rectifier-end converter, an inverter-end converter, a DC line and a grounding electrode.

When the DC line fails, whether the fault can be cleared quickly is the key to stable operation of the DC transmission system. At present, the voltage source converter generally adopts a modular multilevel converter (MMC) structure, and a half bridge MMC based on a conventional half bridge sub-module (HBSM) cannot block a DC-side fault. Under the condition that a DC side is not equipped with a DC circuit breaker or a high-power diode, a converter topology with DC-side fault clearing capability should be adopted in a flexible DC station, such as a full bridge MMC based on a full bridge sub-module (FBSM) or a hybrid MMC based on a hybrid of full bridge and half bridge sub-modules.

As to converters with DC-side fault clearing capability, Li Shaohua et al. proposed in "Optimal Design for Hybrid MMC and Its DC Fault Ride-Through Strategy" (Proceedings of the CSEE, 2016, 36 (7): 1849-1858) that a DC-side fault can be cleared by controlling a converter to output a zero DC current after the DC-side line fault occurs. This method can effectively deal with a metallic instantaneous grounding fault of a DC-side line of a voltage source converter. However, in practical engineering, common high-resistance grounding faults or persistent grounding faults cannot be effectively handled: for high-resistance grounding faults, the detection time of a DC line fault is often long because of the relatively gentle change of electrical quantity, and if a current of the voltage source converter flowing to a fault point continues to increase before the DC line fault is detected and over-current locking of the voltage source converter is caused, the fault will not be cleared; and for persistent grounding faults, because the voltage source converter will try to restore a DC voltage after the de-ionization process, under the condition that the fault has not been actually cleared, with the rise of the DC voltage, the voltage source converter will re-inject a current into the fault point, which will lead to over-current locking of the voltage source converter.

For voltage source converters without DC circuit breakers or high-power diodes on the DC side, a method for handling different types of DC side line faults has not been proposed yet, so it is necessary to provide a method allowing voltage source converters to adaptively handle different types of DC side line faults.

The above information disclosed in the background art section is only used to enhance the understanding of the background of the invention, so it may contain information that does not constitute the prior art known to those of ordinary skill in the art.

Summary

The application aims to provide a method and device for handling a DC-side line fault of a voltage source converter, so as to meet the requirement for handling DC line faults of a DC transmission system equipped with a voltage source converter.

According to an aspect of the present application, a method for handling a DC-side line fault of a voltage source converter is provided, wherein the voltage source converter is arranged at a rectifier end or an inverter end of any DC pole of a DC transmission system, and the rectifier end and the inverter end are connected through a DC line. The fault handling method comprises:

acquiring a normal value of a DC voltage reference value of the voltage source converter;

setting a DC current limiting target value of the voltage source converter;

acquiring a DC current limiting control output value based on a DC current measured value and the DC current limiting target value;

setting the DC voltage reference value of the voltage source converter based on the normal value of the DC voltage reference value and the DC current limiting control output value;

setting the DC current limiting target value to be zero when a DC side line fault is detected; and

rising the DC voltage reference value of the voltage source converter in response to end of de-ionization, and changing the DC current limit target value of the voltage source converter.

According to some embodiments, acquiring the normal value of the DC voltage reference value of the voltage source converter comprises:

acquires a DC voltage reference value of a DC pole at an end where the voltage source converter is located;

wherein under a condition that the rectifier end or the inverter end of the DC pole is provided with one voltage source converter, the normal value of the DC voltage reference value is the DC voltage reference value of the DC pole; and

under a condition that the rectifier end or the inverter end of the DC pole is provided with a plurality of voltage source converters operating in series, the normal value of the DC voltage reference value is:

$$U_{\text{dVref-Nom}} = \frac{U_{\text{dcref}}}{M},$$

where $U_{\text{dVref-Nom}}$ is the normal value of the DC voltage reference value, $U_{\text{dcref}}$ is the DC voltage reference value of the DC pole, and M is a total number of the voltage source converters, and is a positive integer greater than 1.

According to some embodiments, setting the DC current limiting target value of the voltage source converter comprises:

setting the DC current limiting target value as a negative first current threshold;

wherein under a condition that the voltage source converter operates at the inverter end, the first current threshold satisfies $0.1I_{\text{dcN}} \leq \Delta I \leq 1.0I_{\text{dcN}}$; and under a condition that the voltage source converter operates at the rectifier end, the first current threshold satisfies $(I_{\text{dcref}}+0.1I_{\text{dcN}}) \leq \Delta I \leq I_{\text{dcmax}}$;

where $\Delta I$ is the first current threshold, $I_{\text{dcN}}$ is a DC current rated value, $I_{\text{dcref}}$ is a DC current reference value of the DC pole, and $I_{\text{dcmax}}$ is a DC current continuous operation upper limit value.

According to some embodiments, acquiring the DC current limiting control output value based on the DC current measured value and the DC current limiting target value comprises:

obtaining a difference value by subtracting the DC current limiting target value from the DC current measured value; and

performing linear control on the difference value.

According to some embodiments, setting the DC voltage reference value of the voltage source converter based on the normal value of the DC voltage reference value and the DC current limiting control output value comprises:

setting a smaller one of the DC current limiting control output value and the normal value of the DC voltage reference value of the voltage source converter as the DC voltage reference value.

According to some embodiments, rising the DC voltage reference value of the voltage source converter in response to the end of de-ionization comprises:

rising the DC voltage reference value of the voltage source converter toward the normal value of the DC voltage reference value.

According to some embodiments, changing the DC current limiting target value of the voltage source converter comprises:

changing the DC current limiting target value to the negative first current threshold.

According to some embodiments, the method further comprises:

setting the DC current limiting control output value as an upper limit of the DC voltage reference value of the voltage source converter in response to the end of de-ionization.

According to some embodiments, the device further comprises:

setting a bridge arm voltage DC offset as 1/2 of the DC voltage reference value of the voltage source converter; and

calculating a bridge arm reference voltage by using the bridge arm voltage DC offset.

According to some embodiments, the method further comprises:

under a condition that the voltage source converter is used for DC voltage control of the DC pole, obtaining a difference value by subtracting a DC voltage measured value of the voltage source converter from the DC voltage reference value of the voltage source converter; and

performing linear control on the difference value to obtain an active current reference value, wherein the active current reference value is used for calculating the bridge arm reference voltage.

According to some embodiments, the method further comprises:

under a condition that the rectifier end or the inverter end of the DC pole is provided with a plurality of voltage source converters operating in series, using any one of the voltage source converters as a master converter and using remaining voltage source converters as slave converters, and keeping DC voltage reference values of the slave converters to be consistent with DC voltage reference value of the master converter.

According to another aspect of the present application, a device for handling a DC-side line fault of a voltage source converter is provided, wherein the voltage source converter is arranged at a rectifier end or an inverter end of any DC pole of a DC transmission system, and the rectifier end and the inverter end are connected through a DC line. The device comprises:

a DC voltage reference normal value acquisition unit configured to acquire a normal value of a DC voltage reference value of the voltage source converter;

a DC current limiting target value setting unit configured to set a DC current limiting target value of the voltage source converter when no DC-side line fault is detected, or to set the DC current limiting target value to be zero in response to a DC-side line fault detected; and to change the DC current limiting target value;

a current limiting control output unit configured to acquire a DC current limiting control output value; and

a DC voltage reference value setting unit configured to acquire a DC voltage reference value of the voltage source converter when no DC-side line fault is detected, or when a DC-side line fault is detected, and de-ionization is not end; and to rise the DC voltage reference value of the voltage source converter in response to end of de-ionization.

According to some embodiments, the DC voltage reference normal value acquisition unit is further configured to:

acquire a DC voltage reference value of a DC pole at an end where the voltage source converter is located;

wherein under a condition that the rectifier end or the inverter end of the DC pole is provided with one voltage source converter, the normal value of the DC voltage reference value is the DC voltage reference value of the DC pole; and

under a condition that the rectifier end or the inverter end of the DC pole is provided with a plurality of voltage source converters operating in series, the normal value of the DC voltage reference value is:

$$U_{\text{dVref-Nom}} = \frac{U_{\text{dcref}}}{M},$$

where $U_{\text{dVref-Nom}}$ is the normal value of the DC voltage reference value, $U_{\text{dcref}}$ is the DC voltage reference value of the DC pole, and M is a total number of the voltage source converters, and is a positive integer greater than 1.

According to some embodiments, setting the DC current limiting target value of the voltage source converter comprises:

setting the DC current limiting target value as a negative first current threshold;

wherein under a condition that the voltage source converter operates at the inverter end, the first current threshold satisfies $0.1 I_{\text{dcN}} \leq \Delta I \leq 1.0 I_{\text{dcN}}$; and

under a condition that the voltage source converter operates at the rectifier end, the first current threshold satisfies $(I_{\text{dcref}} + 0.1 I_{\text{dcN}}) \leq \Delta I \leq I_{\text{dcmax}}$;

where $\Delta I$ is the first current threshold, $I_{\text{dcN}}$ is a DC current rated value, $I_{\text{dcref}}$ is a DC current reference value of the DC pole, and $I_{\text{dcmax}}$ is a DC current continuous operation upper limit value.

According to some embodiments, the device further comprises:

a limiting unit configured to set the DC current limiting control output value as an upper limit of the DC voltage reference value of the voltage source converter when the DC current limiting target value is set as the negative first current threshold.

According to some embodiments, the device further comprises: a bridge arm reference voltage calculation unit configured to calculate a bridge arm reference voltage by using a bridge arm voltage DC offset; wherein the bridge arm voltage DC offset is 1/2 of the DC voltage reference value of the voltage source converter.

According to another aspect of the application, a voltage source converter is provided, comprising:

the device for handling a DC-side line fault of a voltage source converter as described in any aspect above.

The application provides a method and device for handling a DC-side line fault of a voltage source converter. A DC current limiting controller is configured for the voltage source converter to control a DC current during a line fault: when a DC-side line fault of the voltage source converter occurs but is not detected, a current of the voltage source converter flowing to a line fault point is limited to a safe level; when the DC-side line fault is detected, the current of the voltage source converter flowing to the line fault point is controlled to zero to clear the fault; and in the process of restart and recovery, it is ensured that no current beyond the safe level flows from the voltage source converter to the line fault point. By means of the method, the voltage source converter can adaptively handle different types of DC-side line faults, so as to meet the requirement for handling DC line faults of a DC transmission system equipped with a voltage source converter.

It should be understood that the above general description and the following detailed description are only exemplary, and do not limit the application.

Brief Description of the Drawings

The above and other objects, features and advantages of the application will become more apparent by describing in detail exemplary embodiments with reference to the accompanying drawings. The drawings described below are only some embodiments of the application, and do not limit the application.

Fig. 1 shows a diagram of a main loop of an existing two-terminal bipolar flexible DC transmission system;
Fig. 2 shows a topology diagram of a voltage source converter according to an exemplary embodiment;
Fig. 3 shows an equivalent circuit diagram of a DC side of an inverter-end voltage source converter according to an exemplary embodiment;

Fig. 4 shows an equivalent circuit diagram of a DC-side line of an inverter-end voltage source converter after a fault occurs according to an exemplary embodiment;

Fig. 5 shows a flowchart of handling a DC-side line fault of a voltage source converter according to an exemplary embodiment;

Fig. 6 shows a diagram of acquiring a normal value of a DC voltage reference value of a voltage source converter according to an exemplary embodiment;

Fig. 7 shows a topology diagram of two or more voltage source converters operating in series according to an exemplary embodiment;

Fig. 8 shows a diagram of acquiring a normal value of a DC voltage reference value of a voltage source converter according to another exemplary embodiment;

Fig. 9 shows a structural diagram of a voltage source converter controller configured with a DC current limiting controller according to an exemplary embodiment; and

Fig. 10 shows a diagram of a device for handling a DC-side line fault of a voltage source converter according to an exemplary embodiment.

Detailed Description of Embodiments

Exemplary embodiments will be described more fully below with reference to the accompanying drawings. However, the exemplary embodiments can be implemented in various forms and should not be construed as limited to the embodiments set forth herein. These embodiments are provided to make this application more thorough and complete, and to fully convey the concept of the exemplary embodiments to those skilled in the art. In the drawings, the same reference numerals refer to the same or similar parts, so repeated descriptions will be omitted.

The described features, structures, or characteristics may be combined in any suitable manner in one or more embodiments. In the following description, numerous specific details are provided to give a thorough understanding of the embodiments of the disclosure. However, those skilled in the art will realize that the technical solution of the disclosure can be practiced without one or more of these specific details, or other ways, components, materials or devices can be adopted. In these cases, well-known structures, methods, devices, implementations, materials or operations will not be shown or described in detail.

The flowchart shown in the drawings is only an exemplary illustration, and does not necessarily include all contents and operations/steps, nor does it have to be executed in the described order. For example, some operations/steps can be decomposed, while some operations/steps can be combined or partially combined, so the actual execution order may change according to the actual situation.

Terms such as "first" and "second" in the specification and claims of this application and the drawings are used to distinguish different objects, but not to describe a specific order. Further, the terms "comprise" and "have" and any variations thereof are intended to cover non-exclusive inclusion. For example, a process, method, system, product or device comprising a series of steps or units is not limited to the listed steps or units, but optionally comprises steps or units not listed, or optionally comprises other steps or units inherent to the process, method, product or device.

Those skilled in the art can understand that the drawings are only diagrams of the exemplary embodiments. The modules or processes in the drawings are not necessarily a must for the implementation of this application, so they should not be used to limit the scope of protection of this application.

The application provides a method and device for handling a DC-side line fault of a voltage source converter, wherein the voltage source converter is arranged at a rectifier end or an inverter end of any DC pole of a DC transmission system, and the rectifier end and the inverter end are connected through a DC line. By means of the method and device, the voltage source converter can adaptively handle different types of DC-side line faults, so as to meet the requirement for handling DC line faults of a DC transmission system equipped with a voltage source converter.

Fig. 1 shows a diagram of a main loop of an existing two-terminal bipolar flexible DC transmission system.

As shown in Fig. 1, the main loop of the two-terminal bipolar flexible DC transmission system comprises a positive DC pole and a negative DC pole, and each DC pole is a complete DC transmission loop comprising a rectifier-end converter, an inverter-end converter, a DC line and a grounding electrode. The rectifier-end converter and the inverter-end converter in this embodiment are both voltage source converters.

Fig. 2 shows a topology diagram of a voltage source converter according to an exemplary embodiment.

The voltage source converter adopts a modular multilevel structure, comprising the following two types of sub-modules:

a first type of sub-module is a sub-module which can output positive, negative and zero levels in a non-locking state, such as a full bridge sub-module (FBSM); and

a second type of sub-module is a sub-module which can only output positive and zero levels in a non-locking state, such as a half bridge sub-module (HBSM) and a semi full bridge sub-module (SFBSM).

The topology diagram of the voltage source converter is shown in Fig. 2, where $U_{ap}$, $U_{bp}$ and $U_{cp}$ are upper bridge arm voltages of A phase, B phase and C phase of the voltage source converter respectively, and $U_{an}$, $U_{bn}$ and $U_{cn}$ are lower bridge arm voltages of A phase, B phase and C phase respectively. $L_0$ is an inductance value of a bridge arm reactor.

A bridge arm sub-module of the voltage source converter may be configured in the following two ways:

in the first way, upper and lower bridge arms of each phase are each composed of the first type of sub-modules which are in cascade connection; and
in the second way, upper and lower bridge arms of each phase are each a hybrid bridge arm composed of two types of sub-modules, namely, the first type of sub-modules and the second type of sub-modules, which are in cascade connection, and the number ratio of the two types of sub-modules of each bridge arm is the same.

A DC-side equivalent circuit of the voltage source converter can be as shown in Fig. 3, where $U_{dV}$ represents a DC voltage measured value of the voltage source converter, $u_{com}$ represents an ideal DC voltage of the voltage source converter, and $L_{eq}$ represents an equivalent inductance of the voltage source converter.

According to the sub-module connection characteristics of the voltage source converter, assuming that the working sub-modules of different bridge arms have the same capacitor voltage average value $U_c$, $u_{com}$ can be expressed as:

$$u_{com} = \frac{U_{dVref}}{U_{cN}} U_c \quad (1)$$

where $U_{cN}$ is a rated capacitor voltage of the sub-module, and $U_{dVref}$ is a DC voltage reference value of the converter.

It can be seen that the ideal DC voltage of the voltage source converter will be determined by the DC voltage reference value $U_{dVref}$ of the converter under the condition that the capacitor voltage of the sub-module $U_c$ remains stable, and the DC voltage output of the converter can be controlled by adjusting the DC voltage reference value $U_{dVref}$ of the voltage source converter.

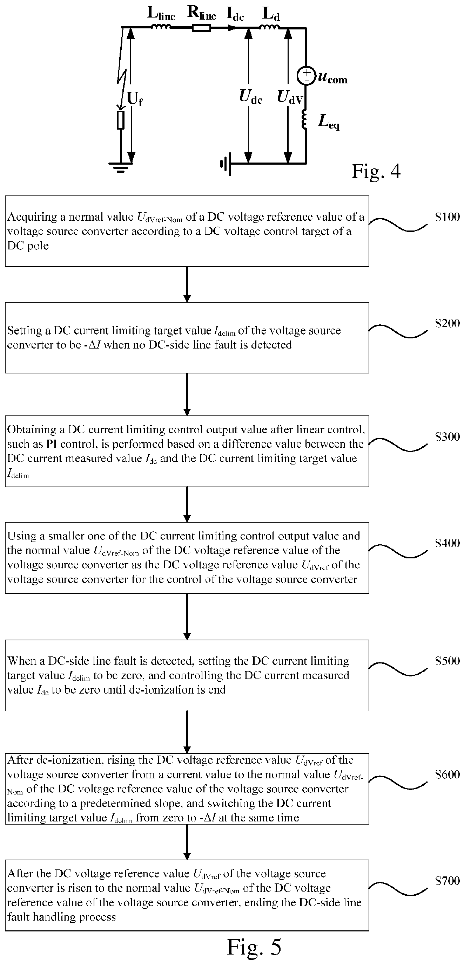

Taking an inverter-end voltage source converter as an example, an equivalent circuit of the converter after a DC-side line fault occurs is shown in Fig. 4. According to Kirchhoffs Voltage Law, a voltage between an inverter station and a DC line fault point satisfies the following expression:

$$U_f = u_{com} + (L_{line} + L_d + L_{eq}) \frac{dI_{dc}}{dt} + I_{dc} R_{line} \quad (2)$$

where Uf is a DC voltage at the fault point, $R_{line}$ and $L_{line}$ are an equivalent resistance and inductance of a DC line from an inverter end to the fault point respectively, and $L_d$ is an inductance of a smoothing reactor at the inverter end.

It can be seen from Expression (2) that when a DC line fault occurs and Uf is lower than $u_{com}$, a DC current $I_{dc}$ at the inverter end will flow into the fault point in a reverse direction. Due to the effects of inductance elements such as the DC line, the smoothing reactor and a bridge arm reactor, $I_{dc}$ at the inverter end will first drop to 0 from the initial value before the fault occurs, and then increase from 0 reversely. If the DC current continues to increase reversely to an over-current level of the converter, the converter will be locked.

When a DC line fault occurs but is not detected, if the voltage source converter actively adjusts $u_{com}$ and outputs a DC voltage matching the fault point, a current provided by the voltage source converter to the fault point will be maintained at a safe level, and over-current locking of the voltage source converter can be avoided.

Fig. 5 shows a flowchart for handling a DC-side line fault of a voltage source converter according to an exemplary embodiment.

S100: Acquiring a normal value $U_{dVref\text{-}Nom}$ of a DC voltage reference value of a voltage source converter according to a DC voltage control target of a DC pole.

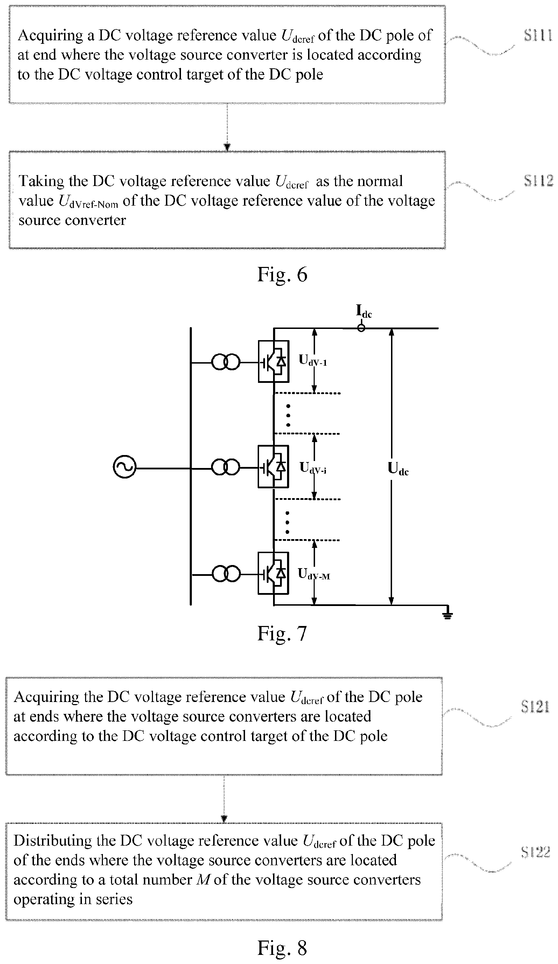

According to some embodiments, when the rectifier end or inverter end of the DC pole is provided with a single voltage source converter, as shown in Fig. 6, the method includes:

S111: acquiring a DC voltage reference value $U_{dcref}$ of the DC pole of at end where the voltage source converter is located according to the DC voltage control target of the DC pole; and
S 112: taking the DC voltage reference value $U_{dcref}$ as the normal value $U_{dVref\text{-}Nom}$ of the DC voltage reference value of the voltage source converter.

According to some embodiments, if the topology shown in Fig. 7 is adopted, the rectifier end or inverter end of the DC pole is provided with two or more voltage source converters operating in series, as shown in Fig. 8, the method includes:

S121: acquiring the DC voltage reference value $U_{dcref}$ of the DC pole at ends where the voltage source converters are located according to the DC voltage control target of the DC pole; and
S122: distributing the DC voltage reference value $U_{dcref}$ of the DC pole of the ends where the voltage source converters are located according to a total number M of the voltage source converters operating in series.

For the normal value $U_{dVref\text{-}Nom}$ of the DC voltage reference value of each operating voltage source

$$U_{dVref\text{-}Nom} = \frac{U_{dcref}}{M}$$

converter, , and $M$ is a positive integer greater than 1.

S200: setting a DC current limiting target value $I_{dclim}$ of the voltage source converter to be $-\Delta I$ when no DC-side line fault is detected.

In some embodiments, a first current threshold $\Delta I$ satisfies $0.1I_{dcN} \leq \Delta I \leq 1.0I_{dcN}$ when the voltage source converter operates at the inverter end, and the first current threshold $\Delta I$ satisfies $(I_{dcref}+0.1I_{dcN}) \leq \Delta I \leq I_{dcmax}$ when the voltage source converter operates at the rectifier end, where $I_{dcN}$ is a DC current rated value, $I_{dcref}$ is a DC current reference value of the DC pole, and $I_{dcmax}$ is a DC current continuous operation upper limit value.

S300: Obtaining a DC current limiting control output value after linear control, such as PI control, is performed based on a difference value between the DC current measured value $I_{dc}$ and the DC current limiting target value $I_{dclim}$.

S400: Using a smaller one of the DC current limiting control output value and the normal value $U_{dVref\text{-}Nom}$ of the DC voltage reference value of the voltage source converter as the DC voltage reference value $U_{dVref}$ of the voltage source converter for the control of the voltage source converter.

S500: When a DC-side line fault is detected, setting the DC current limiting target value $I_{dclim}$ to be zero, and controlling the DC current measured value $I_{dc}$ to be zero until de-ionization is end.

S600: After de-ionization, rising the DC voltage reference value $U_{dVref}$ of the voltage source converter from a current value to the normal value $U_{dVref\text{-}Nom}$ of the DC voltage reference value of the voltage source converter according to a predetermined slope, and switching the DC current limiting target value $I_{dclim}$ from zero to $-\Delta I$ at the same time.

According to some embodiments, the method for handling a DC-side line fault of a voltage source converter further comprises: in S600, while switching the DC current limiting target value $I_{dclim}$ from zero to $-\Delta I$, taking the DC current limiting control output value as an upper limit of the DC voltage reference value $U_{dVref}$ of the voltage source converter.

S700: After the DC voltage reference value $U_{dVref}$ of the voltage source converter is risen to the normal value $U_{dVref\text{-}Nom}$ of the DC voltage reference value of the voltage source converter, ending the DC-side line fault handling process.

When the voltage source converter is used for the DC voltage control of the DC pole, a d-axis current reference value is obtained after a difference between the calculated DC voltage reference value $U_{dVref}$ of the voltage source converter and the DC voltage measured value $U_{dV}$ of the voltage source converter is adjusted by PI, so as to control the DC voltage of the DC pole.

According to some embodiments, on the basis of the above, the method for handling a DC-side line fault of a voltage source converter further comprises: calculating a bridge arm reference voltage by taking $\frac{1}{2}$ of the calculated DC voltage reference value $U_{dVref}$ of the voltage source converter as a bridge arm voltage DC offset of the voltage source converter, wherein the bridge arm reference voltage is used for controlling an output AC voltage of the voltage source converter. The calculation formula of the bridge arm reference voltage is:

$$u_{pj} = 0.5U_{dVref} - u_{jo\text{-}ref}$$
$$u_{nj} = 0.5U_{dVref} + u_{jo\text{-}ref} \qquad (3)$$
$$(j=a, b, c)$$

Where $u_{pj}$ is an upper bridge arm reference voltage of j phase, $u_{nj}$ is a lower bridge arm reference voltage of j phase, and $u_{jo\text{-}ref}$ is an AC reference voltage of j phase.

According to some embodiments, when the rectifier end or inverter end of the DC pole is provided with two or more voltage source converters operating in series, one of the voltage source converters is selected as a master converter, the other converters are all slave converters, and the DC voltage reference values of the slave converters are kept to be consistent with the DC voltage reference value of the master converter.

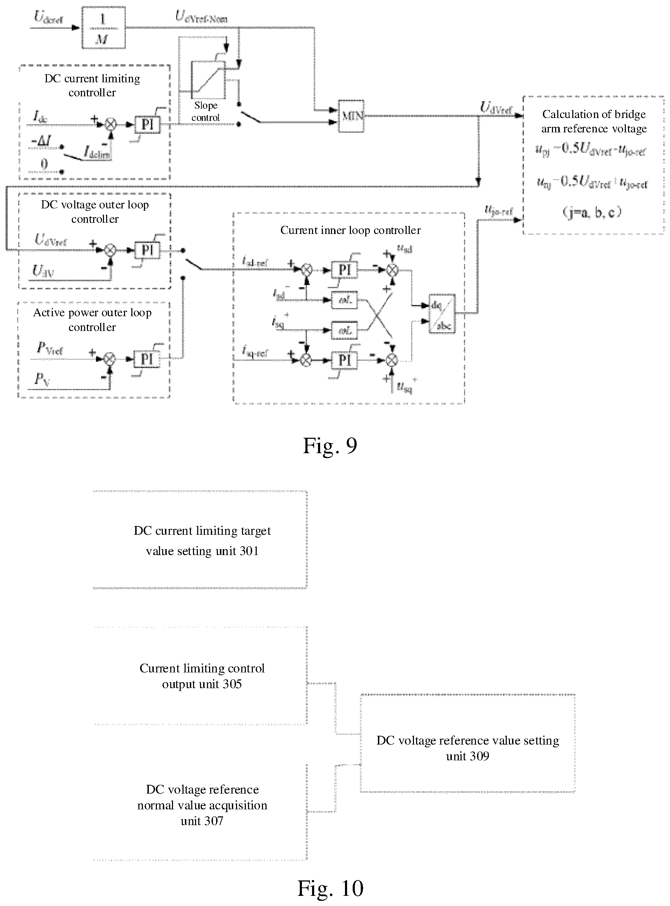

Fig. 9 shows a structural diagram of a voltage source converter controller configured with a DC current limiting controller according to an exemplary embodiment.

A current inner-loop controller, a DC voltage outer-loop controller and an active power outer-loop controller are configured, wherein the active power outer-loop controller performs closed-loop control according to an active power reference value $P_{Vref}$ and an actual value $P_V$ to obtain a current reference value, so as to control an output active power of the voltage source converter; the current inner-loop controller controls an output AC current of the voltage source converter according to an input active current reference value $i_{sd\text{-}ref}$ and reactive current reference value $i_{sq\text{-}ref}$; on this basis, a DC current limiting controller is configured for the voltage source converter, and the DC current limiting target value $I_{dclim}$ is set to $-\Delta I$; the controller aims to limit the DC current to $-\Delta I$; when the DC current is higher than $-\Delta I$, the controller is in a positive saturation state and does not actually take effect; when the DC current drops below $-\Delta I$, the controller will automatically take effect and adjust the DC voltage reference value, so that the DC current flowing to the fault point is clamped at $-\Delta I$, thus ensuring that over-current of the voltage source converter is avoided before the fault is detected; the value range of $\Delta I$ is determined according to whether the voltage source converter runs at the inverter end or the rectifier end; when the voltage source converter runs at the inverter end, the value range

of $\Delta I$ is $0.1I_{dcN} \leq \Delta I \leq 1.0I_{dcN}$; and when the voltage source converter runs at the rectifier end, the value range of $\Delta I$ is $(I_{dcref}+0.1I_{dcN}) \leq \Delta I_{dcmax}$.

When a DC line fault is detected, in order to clear the DC line fault current, it is necessary to prevent the voltage source converter from injecting current into the DC-side line fault point. Therefore, the DC current limiting target value $I_{dclim}$ is switched from $-\Delta I$ to zero, and the DC current measured value $I_{dc}$ is controlled to be zero until the end of de-ionization.

After the de-ionization, the voltage source converter will restore the DC voltage, and the DC voltage reference value $U_{dVref}$ will rise from the current value to the normal value $U_{dVref-Nom}$ of the DC voltage reference value according to the predetermined slope. In order to avoid over-current in the restart and recovery stage under a persistent ground fault, the DC current limiting controller can be kept in operation and the DC current limiting target value $I_{dclim}$ can be switched from 0 to $-\Delta I$ in the restart and boosting stage. At the same time, the output of the DC current limiting controller is regarded as the upper limit of the DC voltage reference value. Once the DC current reversely increases to a level below $-\Delta I$ in the restart and boosting stage, the controller will automatically take effect to limit the rising of the DC voltage reference value and clamp the DC current flowing to the fault point at $-\Delta I$. After the DC line fault is detected again, the next round of fault clearing will be started, and the DC current limiting controller will quit after the DC voltage reference value $U_{dVref}$ is risen to the normal value $U_{dVref-Nom}$ of the DC voltage reference value of the voltage source converter, marking the end of the DC-side line fault handling process.

A bridge arm reference voltage is calculated by taking $\dfrac{1}{2}$ of the calculated DC voltage reference value $U_{dVref}$ of the voltage source converter as a bridge arm voltage DC offset of the voltage source converter.

When the voltage source converter is used for DC voltage control of the DC pole, a difference value between the calculated DC voltage reference value $U_{dVref}$ of the voltage source converter and the DC voltage measured value $U_{dV}$ of the voltage source converter is input to the DC voltage outer loop controller of the voltage source converter for closed-loop control, so as to control the DC voltage of the DC pole. When the voltage source converter is used for active power control, the active power outer loop controller is used for controlling the active output of the voltage source converter.

Fig. 10 shows a diagram of a device for handling a DC-side line fault of a voltage source converter according to an exemplary embodiment.

As shown in Fig. 10, the device for handling a DC-side line fault of a voltage source converter comprises a DC voltage reference normal value acquisition unit 307, a DC current limiting target value setting unit 301, a current limiting control output unit 305 and a DC voltage reference value setting unit 309, wherein

the DC voltage reference normal value acquisition unit 307 is configured to acquire a normal value $U_{dVref-Nom}$ of a DC voltage reference value of the voltage source converter according to a DC voltage control target of a DC pole;

the DC current limiting target value setting unit 301 is configured to set a DC current limiting target value $I_{dclim}$ of the voltage source converter to be a first current threshold $-\Delta I$ which is negative when no DC-side line fault is detected; to set the DC current limiting target value $I_{dclim}$ to be zero and to control a DC current measured value $I_{dc}$ to be zero when a DC-side line fault is detected, until the de-ionization is end; and after de-ionization, to switch the DC current limiting target value $I_{dclim}$ from zero to $-\Delta I$;

the current limiting control output unit 305 is configured to perform linear control, such as PI control, based on a difference value between the DC current measured value $I_{dc}$ and the DC current limiting target value $I_{dclim}$ to obtain a DC current limiting control output value; and

the DC voltage reference value setting unit 309 is configured to use the smaller one of the DC current limiting control output value and the normal value $U_{dVref-Nom}$ of the DC voltage reference value of the voltage source converter as a DC voltage reference value $U_{dVref}$ of the voltage source converter for the control of the voltage source converter when no DC-side line fault is detected, or when a DC-side line fault is detected but de-ionization is not finished; after de-ionization, to rise the DC voltage reference value $U_{dVref}$ of the voltage source converter from the current value to the normal value $U_{dVref-Nom}$ of the DC voltage reference value of the voltage source converter according to a predetermined slope until the DC voltage reference value $U_{dVref}$ of the voltage source converter is risen to the normal value $U_{dVref-Nom}$ of the DC voltage reference value of the voltage source converter.

According to some embodiments, the DC voltage reference normal value acquisition unit 307 acquires the DC voltage reference value $U_{dcref}$ of the DC pole at an end where the voltage source converter is located according to a DC voltage control target of the DC pole; and when a rectifier end or inverter end of the DC pole is provided with a single voltage source converter, $U_{dcref}$ is taken as the normal value $U_{dVref-Nom}$ of the DC voltage reference value of the voltage source converter.

According to some embodiments, when the rectifier end or inverter end of the DC pole is provided with two or more voltage source converters operating in series, the DC voltage reference normal value acquisition unit 307 acquires the DC voltage reference value $U_{dcref}$

of the DC pole of ends where the voltage source converters are located according to the DC voltage control target of the DC pole, and distributes the DC voltage reference value $U_{dcref}$ of the DC pole of the ends where the voltage source converters are located according to the total number M of the voltage source converters operating in series as the normal value $U_{dVref-Nom}$ of the DC voltage reference value of each operating voltage source converter, where $U_{dVref-Nom} = \dfrac{U_{dcref}}{M}$ , and M is a positive integer.

According to some embodiments, $\Delta I$ satisfies $0.1 I_{dcN} \leq \Delta I \leq 1.0 I_{dcN}$ when the voltage source converter operates at the inverter end, and $\Delta I$ satisfies $(I_{dcref}+0.1 I_{dcN}) \leq \Delta I \leq I_{dcmax}$ when the voltage source converter operates at the rectifier end, where $I_{dcN}$ is a DC current rated value, $I_{dcref}$ is a DC current reference value of the DC pole, and $I_{dcmax}$ is a DC current continuous operation upper limit value.

According to some embodiments, the device for handling a DC-side line fault of a voltage source converter further comprises a limiting unit configured to take the DC current limiting control output value as an upper limit of the DC voltage reference value $U_{dVref}$ of the voltage source converter while switching the DC current limiting target value $I_{dclim}$ from zero to-$\Delta I$.

According to some embodiments, the device for handling a DC-side line fault of a voltage source converter further comprises a bridge arm reference voltage calculation unit configured to calculate a bridge arm reference

voltage by taking $\dfrac{1}{2}$ of the calculated DC voltage reference value $U_{dVref}$ of the voltage source converter as a bridge arm voltage DC offset of the voltage source converter.

It should be clearly understood that this application describes how to form and use specific examples, but this application is not limited to any details of these examples. On the contrary, based on the teachings of the disclosure, these principles can be applied to many other embodiments.

In addition, it should be noted that the above drawings are only illustrations of the processes included in the method according to the exemplary embodiments of the application, and are not for limiting purposes. It is easy to understand that the processes shown in the above figures do not indicate or limit the time sequence of these processes. In addition, it is also easy to understand that these processes can be performed synchronously or asynchronously in multiple modules, for example.

Exemplary embodiments of the application have been particularly shown and described above. It should be understood that this application is not limited to the detailed structure, arrangement or implementation described here; on the contrary, this application is intended to cover various modifications and equivalent arrangements included within the spirit and scope of the appended claims.

**Claims**

1. A method for handling a DC-side line fault of a voltage source converter, the voltage source converter being arranged at a rectifier end or an inverter end of any DC pole of a DC transmission system, and the rectifier end and the inverter end being connected through a DC line, **characterized in that** the method comprises:

   acquiring a normal value of a DC voltage reference value of the voltage source converter;
   setting a DC current limiting target value of the voltage source converter;
   acquiring a DC current limiting control output value based on a DC current measured value and the DC current limiting target value;
   setting the DC voltage reference value of the voltage source converter based on the normal value of the DC voltage reference value and the DC current limiting control output value;
   setting the DC current limiting target value to be zero when a DC side line fault is detected; and
   rising the DC voltage reference value of the voltage source converter in response to end of de-ionization, and changing the DC current limit target value of the voltage source converter.

2. The method according to claim 1, wherein acquiring the normal value of the DC voltage reference value of the voltage source converter comprises:

   acquiring a DC voltage reference value of a DC pole at an end where the voltage source converter is located;
   wherein under a condition that the rectifier end or the inverter end of the DC pole is provided with one voltage source converter, the normal value of the DC voltage reference value is the DC voltage reference value of the DC pole; and under a condition that the rectifier end or the inverter end of the DC pole is provided with a plurality of voltage source converters operating in series, the normal value of the DC voltage reference value is:

$$U_{dVref-Nom} = \frac{U_{dcref}}{M} ,$$

   where $U_{dVref-Nom}$ is the normal value of the DC voltage reference value, $U_{dcref}$ is the DC voltage reference value of the DC pole, and M is a total number of the voltage source converters, and is a positive integer greater than 1.

3. The method according to claim 1, wherein setting the DC current limiting target value of the voltage source converter comprises:

setting the DC current limiting target value as a negative first current threshold;
wherein under a condition that the voltage source converter operates at the inverter end, the first current threshold satisfies $0.1I_{dcN} \leq \Delta I \leq 1.0I_{dcN}$; and
under a condition that the voltage source converter operates at the rectifier end, the first current threshold satisfies $(I_{dcref}+0.1I_{dcN}) \leq \Delta I \leq I_{dcmax}$;
where $\Delta I$ is the first current threshold, $I_{dcN}$ is a DC current rated value, $I_{dcref}$ is a DC current reference value of the DC pole, and $I_{dcmax}$ is a DC current continuous operation upper limit value.

4. The method according to claim 1, wherein acquiring the DC current limiting control output value based on the DC current measured value and the DC current limiting target value comprises:

obtaining a difference value by subtracting the DC current limiting target value from the DC current measured value; and
performing linear control on the difference value.

5. The method according to claim 1, wherein setting the DC voltage reference value of the voltage source converter based on the normal value of the DC voltage reference value and the DC current limiting control output value comprises:
setting a smaller one of the DC current limiting control output value and the normal value of the DC voltage reference value of the voltage source converter as the DC voltage reference value.

6. The method according to claim 1, wherein rising the DC voltage reference value of the voltage source converter in response to the end of de-ionization comprises:
rising the DC voltage reference value of the voltage source converter toward the normal value of the DC voltage reference value.

7. The method according to claim 3, wherein changing the DC current limiting target value of the voltage source converter comprises:
changing the DC current limiting target value to the negative first current threshold.

8. The method according to claim 1, further comprising:
setting the DC current limiting control output value as an upper limit of the DC voltage reference value of the voltage source converter in response to the end of de-ionization.

9. The method according to claim 1, further comprising:

setting a bridge arm voltage DC offset as 1/2 of the DC voltage reference value of the voltage source converter; and
calculating a bridge arm reference voltage by using the bridge arm voltage DC offset.

10. The method according to claim 9, further comprising:

under a condition that the voltage source converter is used for DC voltage control of the DC pole, obtaining a difference value by subtracting a DC voltage measured value of the voltage source converter from the DC voltage reference value of the voltage source converter; and
performing linear control on the difference value to obtain an active current reference value, wherein the active current reference value is used for calculating the bridge arm reference voltage.

11. The method according to claim 1, further comprising:
under a condition that the rectifier end or the inverter end of the DC pole is provided with a plurality of voltage source converters operating in series, using any one of the voltage source converters as a master converter and using remaining voltage source converters as slave converters, and keeping DC voltage reference values of the slave converters to be consistent with DC voltage reference value of the master converter.

12. A device for handling a DC-side line fault of a voltage source converter, the voltage source converter being arranged at a rectifier end or an inverter end of any DC pole of a DC transmission system, and the rectifier end and the inverter end being connected through a DC line, **characterized in that** the device comprises:

a DC voltage reference normal value acquisition unit, configured to acquire a normal value of a DC voltage reference value of the voltage source converter;
a DC current limiting target value setting unit, configured to set a DC current limiting target value of the voltage source converter when no DC-side line fault is detected, or to set the DC current limiting target value to be zero in response to a DC-side line fault detected and to change the DC current limiting target value;

a current limiting control output unit, configured to acquire a DC current limiting control output value; and
a DC voltage reference value setting unit, configured to acquire a DC voltage reference value of the voltage source converter when no DC-side line fault is detected, or when a DC-side line fault is detected and de-ionization is not end; and to rise the DC voltage reference value of the voltage source converter in response to end of de-ionization.

13. The device according to claim 12, wherein the DC voltage reference normal value acquisition unit is further configured to:

acquire a DC voltage reference value of a DC pole at an end where the voltage source converter is located;
wherein under a condition that the rectifier end or the inverter end of the DC pole is provided with one voltage source converter, the normal value of the DC voltage reference value is the DC voltage reference value of the DC pole; and under a condition that the rectifier end or the inverter end of the DC pole is provided with a plurality of voltage source converters operating in series, the normal value of the DC voltage reference value is:

$$U_{dVref\text{-}Nom} = \frac{U_{dcref}}{M},$$

where $U_{dVref\text{-}Nom}$ is the normal value of the DC voltage reference value, $U_{dcref}$ is the DC voltage reference value of the DC pole, and M is a total number of the voltage source converters, and is a positive integer greater than 1.

14. The device according to claim 12, wherein setting the DC current limiting target value of the voltage source converter comprises:

setting the DC current limiting target value as a negative first current threshold;
wherein under a condition that the voltage source converter operates at the inverter end, the first current threshold satisfies $0.1 I_{dcN} \leq \Delta I \leq 1.0 I_{dcN}$; and
under a condition that the voltage source converter operates at the rectifier end, the first current threshold satisfies $(I_{dcref} + 0.1 I_{dcN}) \leq \Delta I \leq I_{dcmax}$;
where $\Delta I$ is the first current threshold, $I_{dcN}$ is a DC current rated value, $I_{dcref}$ is a DC current reference value of the DC pole, and $I_{dcmax}$ is a DC current continuous operation upper limit value.

15. The device according to claim 14, further comprising:
a limiting unit, configured to set the DC current limiting control output value as an upper limit of the DC voltage reference value of the voltage source converter when the DC current limiting target value is set as the negative first current threshold.

16. The device according to claim 12, further comprising:

a bridge arm reference voltage calculation unit, configured to calculate a bridge arm reference voltage by using a bridge arm voltage DC offset; wherein the bridge arm voltage DC offset is 1/2 of the DC voltage reference value of the voltage source converter.

17. A voltage source converter, comprising:
the device for handling a DC-side line fault of a voltage source converter according to any one of claims 12-16.

Fig. 1

Fig. 2

Fig. 3

Fig. 4

| | |
|---|---|
| Acquiring a normal value $U_{dVref\text{-}Nom}$ of a DC voltage reference value of a voltage source converter according to a DC voltage control target of a DC pole | S100 |

| | |
|---|---|
| Setting a DC current limiting target value $I_{dclim}$ of the voltage source converter to be $-\Delta I$ when no DC-side line fault is detected | S200 |

| | |
|---|---|
| Obtaining a DC current limiting control output value after linear control, such as PI control, is performed based on a difference value between the DC current measured value $I_{dc}$ and the DC current limiting target value $I_{dclim}$ | S300 |

| | |
|---|---|
| Using a smaller one of the DC current limiting control output value and the normal value $U_{dVref\text{-}Nom}$ of the DC voltage reference value of the voltage source converter as the DC voltage reference value $U_{dVref}$ of the voltage source converter for the control of the voltage source converter | S400 |

| | |
|---|---|
| When a DC-side line fault is detected, setting the DC current limiting target value $I_{dclim}$ to be zero, and controlling the DC current measured value $I_{dc}$ to be zero until de-ionization is end | S500 |

| | |
|---|---|
| After de-ionization, rising the DC voltage reference value $U_{dVref}$ of the voltage source converter from a current value to the normal value $U_{dVref\text{-}Nom}$ of the DC voltage reference value of the voltage source converter according to a predetermined slope, and switching the DC current limiting target value $I_{dclim}$ from zero to $-\Delta I$ at the same time | S600 |

| | |
|---|---|
| After the DC voltage reference value $U_{dVref}$ of the voltage source converter is risen to the normal value $U_{dVref\text{-}Nom}$ of the DC voltage reference value of the voltage source converter, ending the DC-side line fault handling process | S700 |

Fig. 5

Acquiring a DC voltage reference value $U_{dcref}$ of the DC pole of at end where the voltage source converter is located according to the DC voltage control target of the DC pole

S111

Taking the DC voltage reference value $U_{dcref}$ as the normal value $U_{dVref\text{-}Nom}$ of the DC voltage reference value of the voltage source converter

S112

Fig. 6

Fig. 7

Acquiring the DC voltage reference value $U_{dcref}$ of the DC pole at ends where the voltage source converters are located according to the DC voltage control target of the DC pole

S121

Distributing the DC voltage reference value $U_{dcref}$ of the DC pole of the ends where the voltage source converters are located according to a total number $M$ of the voltage source converters operating in series

S122

Fig. 8

Fig. 9

Fig. 10

## INTERNATIONAL SEARCH REPORT

| International application No. |
| --- |
| **PCT/CN2022/074899** |

**A.    CLASSIFICATION OF SUBJECT MATTER**

H02H 7/26(2006.01)i;  H02J 3/36(2006.01)i

According to International Patent Classification (IPC) or to both national classification and IPC

**B.    FIELDS SEARCHED**

Minimum documentation searched (classification system followed by classification symbols)

H02H,H02J

Documentation searched other than minimum documentation to the extent that such documents are included in the fields searched

Electronic data base consulted during the international search (name of data base and, where practicable, search terms used)

CNTXT ENTXT ENTXTC DWPI CNKI: 电压源, 换流器, 直流, 限流, 整流, 逆变, 控制, 故障, 参考值, 电流, 电压, voltage source, converter, direct current, dc, current limiting, rectify, inverter, control, fault, reference value, current, voltage

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111817269 A (TSINGHUA UNIVERSITY) 23 October 2020 (2020-10-23)<br>     description, paragraphs [0046]-[0132] and figures 1-8 | 1-17 |
| A | CN 110350567 A (WUHAN UNIVERSITY) 18 October 2019 (2019-10-18)<br>     entire document | 1-17 |
| A | CN 106329560 A (BEIJING SIFANG AUTOMATION CO., LTD. et al.) 11 January 2017<br>(2017-01-11)<br>     entire document | 1-17 |
| A | EP 3001552 A1 (ALSTOM TECHNOLOGY LTD.) 30 March 2016 (2016-03-30)<br>     entire document | 1-17 |
| A | 刘剑 等 (LIU, Jian et al.). "多端VSC-HVDC直流线路故障限流及限流特性分析 (Fault Current Limitation and Analysis of Current Limiting Characteristic for Multi-terminal VSC-HVDC DC Lines)"<br>中国电机工程学报 (Proceedings of the CSEE),<br>Vol. 36, No. 19, 05 October 2016 (2016-10-05),<br>ISSN: 0258-8013,<br>     entire document | 1-17 |

☐ Further documents are listed in the continuation of Box C.        ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 March 2022** | **07 May 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# INTERNATIONAL SEARCH REPORT
**Information on patent family members**

International application No.

**PCT/CN2022/074899**

| Patent document cited in search report | | | Publication date (day/month/year) | Patent family member(s) | | | Publication date (day/month/year) |
|---|---|---|---|---|---|---|---|
| CN | 111817269 | A | 23 October 2020 | None | | | |
| CN | 110350567 | A | 18 October 2019 | None | | | |
| CN | 106329560 | A | 11 January 2017 | CN | 106329560 | B | 23 July 2019 |
| EP | 3001552 | A1 | 30 March 2016 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LI SHAOHUA et al.** Optimal Design for Hybrid MMC and Its DC Fault Ride-Through Strategy. *Proceedings of the CSEE,* 2016, vol. 36 (7), 1849-1858